# EUROPEAN PATENT APPLICATION

(11) **EP 4 456 255 A1**
(43) Date of publication of application: **30.10.2024**
(21) Application number: 24161040.1
(22) Date of filing: 04.03.2024
(51) Int. Cl.: H01M 10/613, H01M 10/6569, H01M 50/213, H01M 50/233, A62C 3/16

(54) **BATTERY PACK**

(30) Priority: 28.04.2023 CN 202310494442; 16.06.2023 CN 202310722352; 14.07.2023 CN 202310870138
(71) Applicant: Nanjing Chervon Industry Co., Ltd., Nanjing, Jiangsu 211106 (CN)
(72) Inventor: YANG, Dezhong, Nanjing (CN); YUAN, Yongjie, Nanjing (CN)
(74) Representative: Sun, Yiming

(57) **Abstract**

Provided are a battery pack and tool devices to which the battery pack is applicable. The battery pack includes: a housing; and multiple cells disposed in the housing. The battery pack further includes a fluorinated fluid disposed in the housing.

## Description

### TECHNICAL FIELD

The present application relates to an energy storage apparatus and, in particular, to a battery pack and tool devices to which the battery pack is applicable.

### BACKGROUND

In the related art, a battery pack can supply power to a power tool, a household appliance, or another electric device. The security of a battery pack has always been one of the main issues that everyone is concerned about. The thermal runaway of the battery pack is a big issue related to battery security and the personal security and property security of a user. To avoid or reduce the thermal runaway in the battery pack, some secure structures or materials are typically provided to reduce the impact of the thermal runaway.

This part provides background information related to the present application, which is not necessarily the existing art.

### SUMMARY

To solve deficiencies in the existing art, the present application aims to provide a battery pack with higher security and a lower probability of a thermal runaway.

To achieve the preceding aim, the present application adopts the technical solutions described below.

A battery pack includes: a housing; multiple cells disposed in the housing; and a thermally conductive medium surrounding the multiple cells and filled in the housing.

The thermally conductive medium undergoes, at a critical temperature, conversion between a liquid state and a gaseous state, where the critical temperature is any temperature value or any temperature range between 40 °C and 70 °C.

In some examples, the battery pack further includes a cell support disposed in the housing and used for supporting the multiple cells.

In some examples, the cell support is formed with a structure with pores capable of adsorbing a liquid.

In some examples, the cell support includes at least rock wool.

In some examples, the thermally conductive medium in the liquid state can be adsorbed by the cell support.

In some examples, the housing can be full of the thermally conductive medium in the gaseous state.

In some examples, the thermally conductive medium is an insulating medium.

In some examples, the thermally conductive medium includes at least one of perfluorohexanone and perfluoropolyether. In some examples, the thermally conductive medium is a fire suppression agent.

In some examples, the housing is capable of forming a sealed space to accommodate the multiple cells.

A battery pack includes: a housing; and multiple cells disposed in the housing. The battery pack further includes a fluorinated fluid disposed in the housing.

In some examples, the battery pack further includes a cell support disposed in the housing and used for supporting the multiple cells.

In some examples, the fluorinated fluid is adsorbed in the cell support when the fluorinated fluid is in a first temperature range.

In some examples, the housing is full of the fluorinated fluid when the fluorinated fluid is in a second temperature range.

In some examples, the cell support includes at least rock wool.

In some examples, a raised rib is disposed on the outer side of the housing.

In some examples, the housing is capable of forming a sealed space to accommodate the multiple cells.

A battery pack includes: a housing; and a cell module disposed in the housing. The cell module includes: multiple cells; and a cell support configured to support the multiple cells. The cell support has a structure with pores that can absorb a liquid.

In some examples, the cell support is formed of a fireproof material.

In some examples, the cell support includes at least rock wool and/or glass wool.

In some examples, the rock wool and/or glass wool are formed with multiple cylindrical accommodating spaces to accommodate the multiple cells.

In some examples, the battery pack further includes a thermally conductive medium. The thermally conductive medium undergoes, at a critical temperature, conversion between a liquid state and a gaseous state, where the critical temperature is any temperature value or any temperature range between 40 °C and 70 °C.

In some examples, the thermally conductive medium in the liquid state is adsorbed in the cell support.

In some examples, the thermally conductive medium includes at least one of perfluorohexanone and perfluoropolyether.

In some examples, the density of the cell support is greater than or equal to 0.08 g/cm³.

In some examples, when the temperature of the cell module is in a first temperature range, the thermally conductive medium is in the liquid state, and the thermal conductivity of the cell support is lower than or equal to 0.2 W/(m·K); and when the temperature of the cell module is in a second temperature range, the thermally conductive medium is in the gaseous state, and the heat of the multiple cells is conducted to the housing.

In some examples, the battery pack further includes a low-temperature heating apparatus.

A battery pack includes: a housing; and a cell module disposed in the housing. The cell module includes: multiple cells; and a cell spacer configured to be in contact with the multiple cells and space or surround at least part of the multiple cells. When the temperature of the cell module is in a first temperature range, the cell spacer has first thermal conductivity; and when the temperature of the cell module is in a second temperature range, the cell spacer has second thermal conductivity; where the ratio of the second thermal conductivity to the first thermal conductivity is higher than or equal to 10.

In some examples, the first thermal conductivity is lower than or equal to 0.2 W/(m K), and the second thermal conductivity is higher than or equal to 2 W/(m·K).

In some examples, the cell spacer is formed with a structure with pores capable of adsorbing a liquid.

In some examples, the battery pack further includes a fluorinated fluid which is adsorbed in the cell spacer when the fluorinated fluid is in the first temperature range.

In some examples, the fluorinated fluid gasifies in the second temperature range to conduct the heat of the multiple cells to the housing.

In some examples, the cell spacer is formed of a fireproof flame-retardant material.

In some examples, the cell spacer includes at least rock wool.

In some examples, the cell spacer includes at least glass wool.

In some examples, the battery pack further includes a low-temperature heating apparatus.

A battery pack includes: a housing; and multiple cells disposed in the housing. Atmospheric pressure in the battery pack is greater than or equal to 1.1 atmospheres and less than or equal to 1.5 atmospheres.

In some examples, the housing is capable of forming a sealed space to accommodate the multiple cells.

In some examples, the battery pack further includes a fluorinated fluid disposed in the housing.

In some examples, the fluorinated fluid includes at least one of perfluorohexanone and perfluoropolyether.

In some examples, the battery pack further includes a cell support disposed in the housing and used for supporting the multiple cells. The cell support is formed with a structure with pores capable of adsorbing a liquid.

A power tool includes: a tool body; and a battery pack mounting portion disposed on the tool body and used for mounting at least one battery pack. The battery pack includes: a housing; multiple cells disposed in the housing; and a thermally conductive medium surrounding the multiple cells and filled in the housing. The thermally conductive medium undergoes, at a critical temperature, conversion between a liquid state and a gaseous state, where the critical temperature is any temperature value or any temperature range between 40 °C and 70 °C.

An outdoor wheeled tool includes: a tool body; a walking wheel assembly configured to support the tool body; a walking motor configured to drive the walking wheel assembly to walk; and a battery pack mounting portion disposed on the tool body and used for mounting at least one battery pack. The battery pack includes: a housing; and multiple cells disposed in the housing. The battery pack further includes a fluorinated fluid disposed in the housing.

An outdoor electric vehicle includes: a vehicle body; a walking wheel assembly configured to support the vehicle body; a walking motor configured to drive the walking wheel assembly to walk; and a battery pack mounting portion disposed on the vehicle body and used for mounting at least one battery pack. The battery pack includes: a housing; and a cell module disposed in the housing. The cell module includes: multiple cells; and a cell support configured to support the multiple cells. The cell support has a structure with pores that can absorb a liquid.

A battery pack applicable to an outdoor electric device includes: a housing; and a cell module disposed in the housing. The cell module includes: multiple cells; and a cell spacer configured to be in contact with the multiple cells and space or surround at least part of the multiple cells. When the temperature of the cell module is in a first temperature range, the cell spacer has first thermal conductivity; and when the temperature of the cell module is in a second temperature range, the cell spacer has second thermal conductivity; where the ratio of the second thermal conductivity to the first thermal conductivity is higher than or equal to 10.

A riding mower includes: a housing; a seat mounted to the housing; and a walking wheel assembly including walking wheels supporting the housing; a walking motor driving the walking wheels to rotate; and a mowing assembly including a mowing element for mowing grass; a drive motor driving the mowing assembly to mow the grass; and a battery pack mounting portion for mounting a battery pack that supplies power to the walking motor. The battery pack includes: a housing; and multiple cells disposed in the housing. Atmospheric pressure in the battery pack is greater than or equal to 1.1 atmospheres and less than or equal to 1.5 atmospheres.

### BRIEF DESCRIPTION OF DRAWINGS

FIG. 1 shows structural views of part of tool devices applicable to a battery pack according to the present application;
FIG. 2 is a perspective view of a battery pack according to an example of the present application;
FIG. 3 is a schematic view showing part of structures of a battery pack according to an example of the present application;
FIG. 4 is a schematic view of a battery pack cavity according to an example of the present application; and
FIG. 5 is an exploded view showing part of structures of a battery pack according to an example of the present application.

### DETAILED DESCRIPTION

Before any example of the present application is explained in detail, it is to be understood that the present application is not limited to the application in the structural details and arrangement of components set forth in the following description or shown in the preceding drawings.

In the present application, the term "comprising", "including", "having", or any other variant thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. In the absence of more limitations, an element defined by the statement "including a ..." does not exclude the presence of additional identical elements in a process, method, article, or device including the element.

In the present application, the term "and/or" is an association relationship describing associated objects and indicates that three relationships may exist. For example, A and/or B may indicate that A exists alone, both A and B exist, and B exists alone. In addition, in the present application, the character "/" generally indicates an "and/or" relationship between associated objects before and after the character "/".

In the present application, the terms "connected", "combined", "coupled", and "mounted" may be directly connected, combined, coupled, or mounted and may also be indirectly connected, combined, coupled, or mounted. For example, the direct connection indicates that two parts or assemblies are connected together without an intermediate piece, and the indirect connection indicates that two parts or assemblies are separately connected to at least one intermediate piece and the two parts or assemblies are connected through the intermediate piece. Furthermore, "connected" and "coupled" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to plus or minus a certain percentage (such as 1%, 5%, 10%, or more) of an indicated value. A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that the function implemented by an assembly may be implemented by one assembly, multiple assemblies, one part, or multiple parts. Similarly, the function implemented by a part may be implemented by one part, one assembly, or a combination of multiple parts.

In the present application, the terms "up", "down", "left", "right", "front", "rear", and other orientation words are described by the orientations and position relations shown in the drawings and should not be understood as a limitation to the examples of the present application. In addition, in the context, it is also to be understood that when an element is connected "above" or "below" another element, the element not only can be directly connected "above" or "below" another element but also can be indirectly connected "above" or "below" another element through an intermediate element. It is also to be understood that orientation words such as an upper side, a lower side, a left side, a right side, a front side, and a rear side not only represent positive orientations but also may be understood as lateral orientations. For example, the term "below" may refer to "directly below", "on a lower left", "on a lower right", "on a front lower side", "on a rear lower side", and the like.

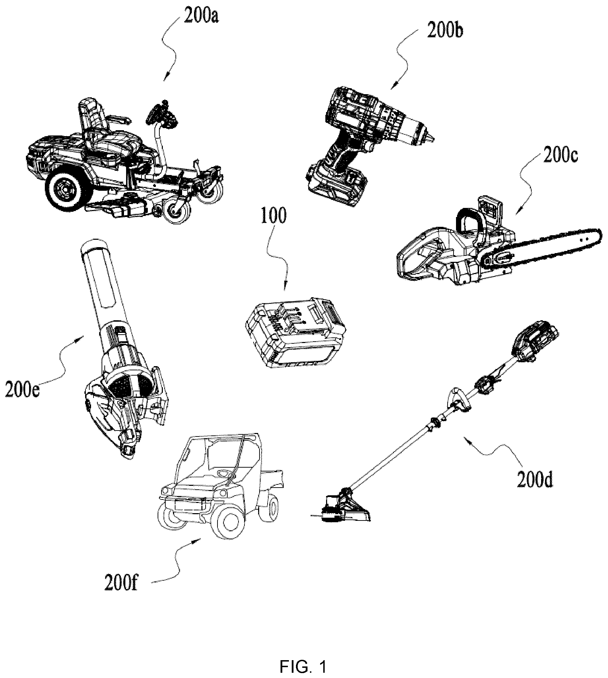

In this example, various power tools 200 can be powered by a battery pack 100. FIG. 1 illustrates several common power tools, for example, a riding mower 200a, an electric drill 200b, a chain saw 200c, a string trimmer 200d, a blower 200e, and an all-terrain vehicle 200f. It is to be noted that a power tool 200 may be a handheld power tool, for example, a drill, a pruner, or a sander. Alternatively, the power tool 200 may be a table tool, for example, a table saw or a miter saw. Alternatively, the power tool 200 may be a push power tool, such as a push mower or a push snow thrower. Alternatively, the power tool 200 may be an outdoor wheeled tool, an outdoor electric vehicle, or the like. Alternatively, the power tool 200 may be a riding power tool, such as a riding mower, a riding vehicle, or an all-terrain vehicle. Alternatively, the power tool 200 may be a robotic tool, such as a robotic mower or a robotic snow thrower. In some examples, the power tool 200 may be an electric drill, an electric lamp, an electric vehicle, or the like. In some examples, the power tool 200 may be a garden tool, such as a hedge trimmer, a blower, a mower, or a chain saw. Alternatively, the power tool 200 may be a decorating tool, such as a screwdriver, a nail gun, a circular saw, or a sander. In some examples, the power tool 200 may be a vegetation care tool, such as a string trimmer, a mower, a hedge trimmer, or a chain saw. Alternatively, the power tool 200 may be a cleaning tool, such as a blower, a snow thrower, or a washer. Alternatively, the power tool 200 may be a drilling tool, such as a drill, a screwdriver, a wrench, or an electric hammer. Alternatively, the power tool 200 may be a sawing tool, such as a reciprocating saw, a jigsaw, or a circular saw. Alternatively, the power tool 200 may be a table tool, such as a table saw, a miter saw, a metal cutter, or an electric router. Alternatively, the power tool 200 may be a sanding tool, such as an angle grinder or a sander. Alternatively, the power tool 200 may be another tool, such as a lamp or a fan. Any other electric device that may be powered by battery pack 100 is within the scope of the present application.

It is to be noted that each of power tools shown or not shown in FIG. 1 has a battery pack mounting portion (not shown) and battery pack mounting portions of different tools have different structures and positions. A tool device such as the outdoor wheeled tool, the outdoor electric vehicle, or the riding mower has a walking wheel assembly, a walking motor, a work attachment (for example, a mowing assembly), and a drive motor, which, as the common arrangement of the tool device, are not described in detail in the present application.

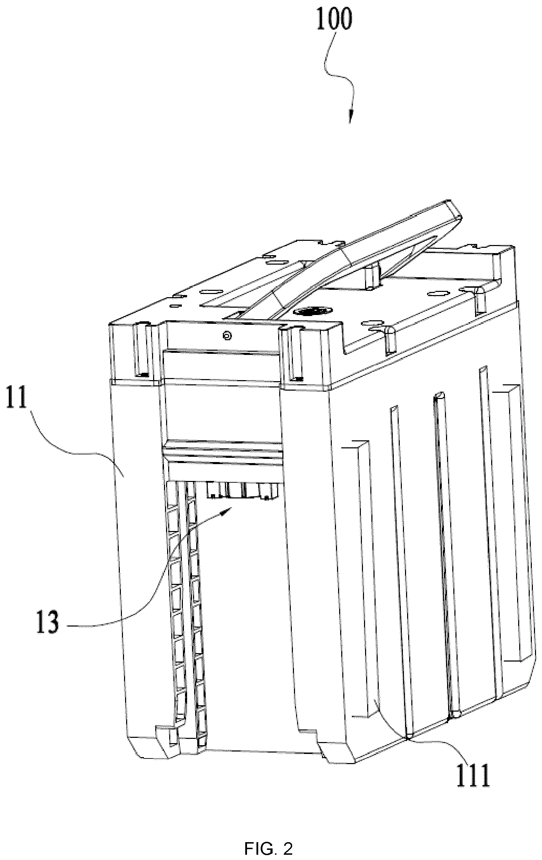

Referring to FIG. 2 to FIG. 5, the battery pack 100 may include at least a housing 11, a cell module 12 disposed in the housing 11, and an interface 13 that can be connected to an external electrical device. The cell module 12 may include at least multiple cells 121 for storing electrical energy.

In this example, a cell 121 may be a cylindrical battery, a square battery, a battery with an aluminum plastic film, a battery with a metal housing, a pouch cell, or the like. In an example, the cell 121 may be a single-tab battery, a dual-tab battery, or a full-tab battery. In this example, at least part of the cells 121 are lithium iron phosphate cells. Alternatively, materials of positive electrodes of at least part of the cells 121 are sodium-ion cells. Alternatively, materials of positive electrodes of at least part of the cells 121 are capacitor batteries. Alternatively, materials of positive electrodes of at least part of the cells 121 are lithium-ion cells, for example, ternary lithium cells. Alternatively, materials of positive electrodes of at least part of the cells 121 are supercapacitors. Alternatively, various cells of different materials or properties are mixed in the battery pack 100.

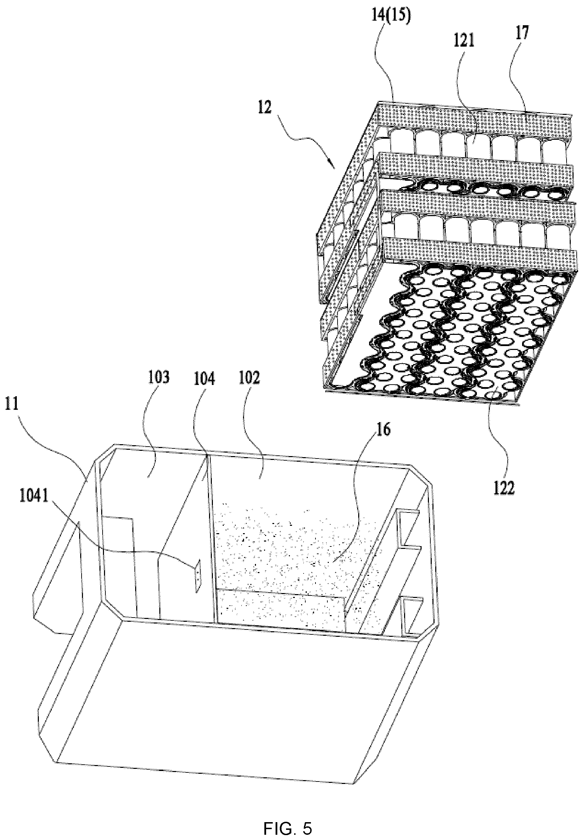

Referring to FIG. 5, the cell module 12 may further include a cell connection piece 122. Positive electrodes or negative electrodes of the multiple cells 121 may be electrically connected to each other by the cell connection piece 122 so that the multiple cells 121 are connected in series or parallel. The number of cells 121 connected by the cell connection piece 122 is specifically related to the rated voltage of the battery pack 100 or the capacity of the battery pack 100. In this example, the cell connection piece 122 basically fits snugly around positive electrode ends or negative electrode ends of the multiple cells 121. The battery pack 100 may include one or more cell modules 12, and the number of cell modules 12 may be set according to an actual requirement.

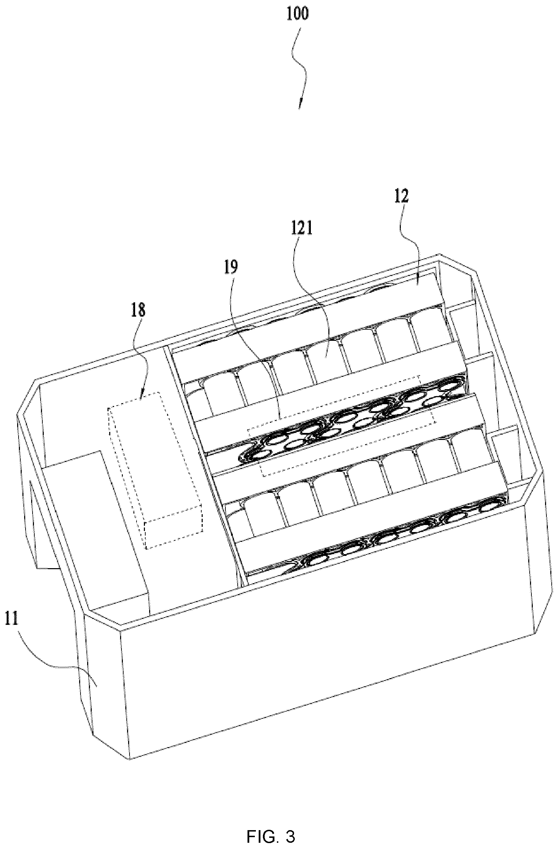

As shown in FIG. 3, a circuit assembly 18 may further be disposed in the battery pack 100. The circuit assembly 18 may include a circuit board (not shown), an electrical connector (not shown) connecting the circuit board to the cell module 12, and an interface assembly (not shown) whose interface 13 is disposed in the housing 11.

The interface 13 may include a discharging interface that can be connected to an electric device, may include a charging interface that can be connected to a charging device, or may include a charging/discharging interface that can be connected to an electric device and a charging device. The type or position of the interface 13 is not limited in this example.

The battery pack 100 further includes a cell support 14 for supporting the cells 121. In other examples, the cell support 14 may belong to the cell module 12. In some examples, the battery pack 100 may further include a cell spacer 15 that can be in contact with the cells 121 and plays a spacing role between different cells 121 or can enclose at least part of the cells 121. In some examples, the cell spacer 15 and the cell support 14 have at least some consistent structures, or the cell spacer 15 and the cell support 14 are the same structure to support the cells 121. In some examples, the cell support 14 or at least part of the cell spacer 14 can form multiple support positions (not shown) for supporting the cells 121 so that the cells 121 can be fixed in the housing 11, or a certain space can exist between adjacent cells 121 so as to ensure that the cells 121 can have a certain heat dissipation space.

In this example, the diameter of the cell 121 is greater than or equal to 3 cm. For example, the diameter of the cell 121 is 3 cm, 3.5 cm, or 4 cm. In an example, the diameter of the cell 121 is greater than or equal to 4 cm. For example, the diameter of the cell 121 may be 4.5 cm, 4.6 cm, or 5 cm. In this example, the height of the cell 121 is greater than or equal to 8 cm. For example, the height of the cell 121 is 8 cm, 9 cm, 10 cm, 11 cm, 12 cm, 13 cm, or 13.5 cm. The cells 121 are relatively large and are not completely enclosed. If some cells 121 in the battery pack 100 in operation are subjected to a thermal runaway, adjacent cells will be affected. Thus, relatively dangerous security incidents such as an explosion or fire may occur in a battery pack.

To avoid the preceding situation, a thermally conductive medium 16 is further included in the battery pack 100. The thermally conductive medium 16 is filled in the housing 11 and can be disposed at least around the cells 121. That is to say, the thermally conductive medium 16 can be in contact with at least the cells 121 and can conduct heat dissipated by the cells 121.

In this example, the thermally conductive medium 16 is at least one insulating medium, which can reduce ion contamination of a printed circuit board (PCB) in the battery pack 100. In an example, the thermally conductive medium 16 may be a fire suppression agent. When a cell 121 in the battery pack 100 is subjected to the thermal runaway, chain reactions of the thermal runaway of the cell 121 can be suppressed by the fire suppression agent, and the security performance of the battery pack 100 can be improved. In an example, the thermally conductive medium 16 is a non-toxic substance, and even a leakage of the thermally conductive medium 16 causes no adverse effect. In this example, the boiling point or the gasification temperature of the thermally conductive medium 16 is relatively low. For example, the boiling point or the gasification temperature of the thermally conductive medium 16 may be any temperature value or any temperature range between 40 °C and 70 °C.

In this example, the thermally conductive medium 16 may have two states. When a temperature reaches a critical temperature, the thermally conductive medium 16 can convert between a liquid state and a gaseous state. The so-called critical temperature may be understood as a temperature value basically at the critical temperature. For example, assuming that the critical temperature is T, the thermally conductive medium 16 starts converting from the liquid state to the gaseous state when the temperature lower than T gradually rises to the critical temperature T, and all of the thermally conductive medium 16 converts to the gaseous state as the temperature continuously rises; and the thermally conductive medium 16 starts converting from the gaseous state to the liquid state when the temperature higher than the critical temperature T gradually drops to the critical temperature T, and all of the thermally conductive medium 16 converts to the liquid state as the temperature continuously drops. In other words, the thermally conductive medium 16 can maintain the liquid state when the temperature is lower than the critical temperature, and the thermally conductive medium 16 can maintain the gaseous state when the temperature is higher than the critical temperature.

It is to be understood that the thermally conductive medium 16 exists in the housing 11 in the form of a liquid when the battery pack 100 is normally used, the temperature in the battery pack 100 does not reach the critical temperature, or the temperature in the battery pack 100 drops below the critical temperature.

In this example, the critical temperature may be any temperature value or any temperature range between 40 °C and 70 °C . Any temperature range may be understood as a temperature range with a minimum temperature and a maximum temperature. For example, the temperature range is from T1 to T2, where T1 is a minimum temperature of a critical temperature range and T2 is a maximum temperature of the critical temperature range. The rise from the temperature to the critical temperature may be understood as a gradual rise from a low temperature to the temperature T1. The drop from the temperature to the critical temperature may be understood as a gradual drop from a high temperature to the temperature T2. In the temperature range of T1 to T2, the thermally conductive medium 16 can complete an entire process of converting from the liquid state into the gaseous state or an entire process of converting from the gaseous state into the liquid state.

In the process where the thermally conductive medium 16 converts from the liquid state to the gaseous state, the heat can be carried away and is conducted to other places. For example, the heat generated by the cells 121 can be conducted to the housing 11 and conducted to the outside through the housing 11, thereby dissipating the heat of the cells 121.

In an example, the thermally conductive medium 16 may be a fluorinated fluid. For example, the thermally conductive medium 16 may be a fluid including perfluorohexanone, a fluid including perfluoropolyether, or a fluid including the mixture of perfluorohexanone and perfluoropolyether.

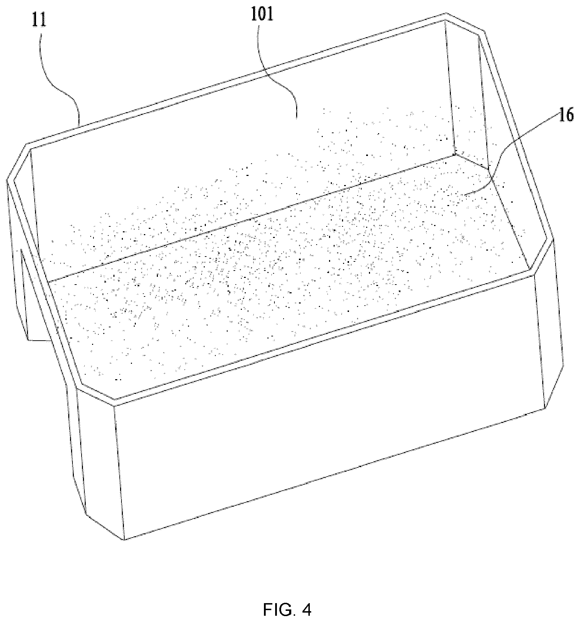

As shown in FIG. 4, the housing 11 can form a fully sealed accommodating space 101 to accommodate the cell module 12 and the thermally conductive medium 16. It is to be understood that the circuit assembly 18 may also be disposed in the accommodating space 101. In a battery pack production process, the thermally conductive medium 16 may be injected, in a vacuum state, into a fully sealed cavity in which the cells 121 are disposed. In this example, atmospheric pressure in the sealed housing 11 is greater than external atmospheric pressure, that is, atmospheric pressure in the battery pack 100 is greater than the external atmospheric pressure so that a liquid such as external water can be prevented from entering the battery pack 100 and affecting the performance of the thermally conductive medium 16. In an example, the atmospheric pressure in the battery pack 100 is greater than or equal to 1.1 atmospheres and less than or equal to 1.5 atmospheres. For example, the atmospheric pressure in the battery pack 100 is 1.1 atmospheres, 1.2 atmospheres, 1.3 atmospheres, 1.4 atmospheres, or 1.5 atmospheres.

In an example, the housing 11 may form at least two accommodating cavities. For example, the housing 11 may form a first accommodating cavity 102 and a second accommodating cavity 103 shown in FIG. 5. The first accommodating cavity 102 may be an enclosed cavity. The cell module 12 and the thermally conductive medium 16 such as the fluorinated fluid are disposed in the enclosed cavity. The second accommodating cavity 102 may be an enclosed cavity or a non-enclosed cavity, which may be at least used for accommodating the circuit assembly 18. In this example, the ratio of the volume of the first accommodating cavity 102 to the volume of the second accommodating cavity 103 is higher than or equal to 2, 2.5, or 3.

In order that the cell module 12 in the first accommodating cavity 102 can be electrically connected to the circuit assembly 18 in the second accommodating cavity 103, a partition 104 of the two cavities may be provided with a mounting hole 1041. The cell module 12 may be connected to the circuit assembly 18 by a connection line. The connection line may include a power line, a communication line, or the like. After the connection line is mounted in the mounting hole 1041, the mounting hole 1041 is sealed on at least one side of the first accommodating cavity 102 so that the thermally conductive medium 16 in the first accommodating cavity 102 does not seep into the second accommodating cavity 103 via the mounting hole 1041 or the connection line. That is to say, a seal design is made to the position where the connection line and the mounting hole 1041 are connected to each other. In an example, the gap between the connection line and the mounting hole 1041 may be sealed by a sealing gasket, by a sealing plug and a sealing gasket, or in another sealing manner, which is not limited here.

In an example, when the thermally conductive medium 16 is in the liquid state, the first accommodating cavity 102 may be full of the thermally conductive medium 16, at least 30% of the first accommodating cavity 102 is filled with the thermally conductive medium 16, 40% of the first accommodating cavity 102 may be filled with the thermally conductive medium 16, 50% of the first accommodating cavity 102 may be filled with the thermally conductive medium 16, 60% of the first accommodating cavity 102 may be filled with the thermally conductive medium 16, 70% of the first accommodating cavity 102 may be filled with the thermally conductive medium 16, 80% of the first accommodating cavity 102 may be filled with the thermally conductive medium 16, or 90% of the first accommodating cavity 102 may be filled with the thermally conductive medium 16. In this example, the proportion of the first accommodating cavity 102 which is filled with the thermally conductive medium 16 may be understood as a percentage of a remaining volume of the first accommodating cavity 102 which can be filled with the thermally conductive medium 16 after the cell module 12 is mounted in the first accommodating cavity 102. For example, the first accommodating cavity 102 may be full of the thermally conductive medium 16, which may be understood as follows: a remaining space of the first accommodating cavity 102 after the cell module 12 is mounted in the first accommodating cavity 102 may be full of the thermally conductive medium 16. In other examples, the proportion of the first accommodating cavity 102 which is filled with the thermally conductive medium 16 may be understood as the percentage of the volume of the thermally conductive medium 16 to the total volume of the first accommodating cavity 102.

In this example, at least atmospheric pressure in the first accommodating cavity 102 is greater than the atmospheric pressure outside the battery pack 100. For example, the atmospheric pressure in the first accommodating cavity 102 is greater than or equal to 1.1 atmospheres and less than or equal to 1.5 atmospheres. For example, the atmospheric pressure in the first accommodating cavity 102 is 1.1 atmospheres, 1.2 atmospheres, 1.3 atmospheres, 1.4 atmospheres, or 1.5 atmospheres. In this example, the atmospheric pressure in the first accommodating cavity 102 is greater than or equal to atmospheric pressure in the second accommodating cavity 103. The atmospheric pressure in the second accommodating cavity 103 may be the same as the atmospheric pressure outside the battery pack 100.

As shown in FIG. 5, the cell support 14 or the cell spacer 15 may be formed with a structure 17 with pores capable of adsorbing the thermally conductive medium 16. The structure 17 with the pores may be a honeycomb-like structure with pores, a sponge-like or cotton-like structure with pores, or another porous structure. In this example, the liquid thermally conductive medium 16 can be adsorbed in the structure 17 with the pores.

In this example, the material of the cell support 14 or the material of the cell spacer 15 has at least a fireproof property and a flame-retardant property or has the property of keeping warm at a low temperature. In addition, the material of the cell support 14 or the material of the cell spacer 15 has support strength after perforation. In an example, the material of the cell support 14 or the material of the cell spacer 15 may be a fireproof flame-retardant material. For example, the material of the cell support 14 or the material of the cell spacer 15 may be glass wool, rock wool, an aerogel, ceramic wool, or a mixture of at least two materials. In an example, the cell support 14 or the cell spacer 15 includes at least the rock wool or may be made of the rock wool. In an example, the cell support 14 or the cell spacer 15 may include the glass wool or may be made of the glass wool. In an example, the cell support 14 or the cell spacer 15 is mixed with the glass wool and the rock wool or is made of the mixture of the glass wool and the rock wool.

In this example, the density of the cell support 14 or the density of the cell spacer 15 is greater than or equal to 0.08 g/cm³, 0.06 g/cm³, 0.07 g/cm³, or 0.09 g/cm³.

In this example, the fluorinated fluid in the liquid state may be completely or partially adsorbed in the structure 17 with the pores, and the entire housing 11 or at least the sealed cavity where the cells 121 are disposed may be suffused with or full of the fluorinated fluid in the gaseous state. In an example, when the temperature in the battery pack 100 is in a first temperature range, the fluorinated fluid is adsorbed in the structure 17 with the pores, and when the temperature in the battery pack 100 is in a second temperature range, the fluorinated fluid can suffuse the entire housing 11. In an example, the first temperature range may be a temperature range less than the critical temperature, and the second temperature range may be a temperature range greater than the critical temperature.

In an example, the thermal conductivity of the cell support 14 or the thermal conductivity of the cell spacer 15 may vary with a temperature. In this example, the thermal conductivity of the cell support 14 or the thermal conductivity of the cell spacer 15 is positively correlated with the temperature of the cell module 12. That is to say, when the temperature of the cell module 12 is relatively low, the preceding thermal conductivity is relatively low, and vice versa. For example, the cell support 14 or the cell spacer 15 has first thermal conductivity when the temperature of the cell module 12 is in the first temperature range, and the cell support 14 or the cell spacer 15 has second thermal conductivity when the temperature of the cell module 12 is in the second temperature range, where the second thermal conductivity is higher than or equal to the first thermal conductivity. In an example, the ratio of the second thermal conductivity to the first thermal conductivity is higher than or equal to 10. In an example, when the temperature of the cell module 12 is in the first temperature range, the thermal conductivity of the cell support 14 or the thermal conductivity of the cell spacer 15 is lower than or equal to 0.2 W/(m·K), and when the temperature of the cell module 12 is in the second temperature range, the thermal conductivity of the cell support 14 or the thermal conductivity of the cell spacer 15 is higher than or equal to 2 W/(m·K).

In an example, the battery pack 100 may further include a low-temperature heating apparatus 19. As shown in FIG. 3, the low-temperature heating apparatus 19 may be configured to be adjacent to the cell module 12 and can heat the cells 121. In an example, the low-temperature heating apparatus 19 may be disposed on the cell support 14 or the cell spacer 15. In this example, the low-temperature heating apparatus 19 may be electrically connected to a battery management module (not shown) in the circuit assembly 18. The low-temperature heating apparatus 19 can be controlled by the battery management module to heat the battery pack 100 when the temperature of the cell module 12 is too low and affects the normal charging and discharging of the battery pack 100.

As shown in FIG. 2, raised ribs 111 are further disposed on the outer side of the housing 11 so that the heat conducted to the housing 11 by the thermally conductive medium 16 can be prevented from passing through the housing of the battery pack 100 and scalding a user. In an example, the ribs 111 may be formed by the housing 11, that is, the ribs 111 and the housing 11 are integrally formed. The thickness of the housing 11 at each of the ribs 111 is greater than the thickness of the housing 11 at another position. In an example, the ribs 111 may be heatproof members mounted to the housing 11 afterwards. The ribs 111 may be stuck on the housing 11 or may be mounted on the housing 11 in another manner. In an example, the ribs 111 may be used as grips for the user to hold or move the battery pack 100. A rib 111 may be elongated or may have any other shape that can prevent a scald or facilitate a hold.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A battery pack (100) for a power tool (200), an outdoor wheeled tool, or an outdoor electric vehicle, comprising:
a housing (11);
a plurality of cells (121) disposed in the housing; and
a fluorinated fluid (16) disposed in the housing.

2. The battery pack according to claim 1, further comprising a cell support disposed in the housing and used for supporting the plurality of cells.

3. The battery pack according to claim 2, wherein the cell support has a structure with pores (17) capable of adsorbing a liquid.

4. The battery pack according to claim 2, wherein a density of the cell support is greater than or equal to 0.08 g/cm³.

5. The battery pack according to claim 2, wherein the fluorinated fluid is adsorbed in the cell support when the fluorinated fluid is in a first temperature range.

6. The battery pack according to claim 1, wherein the housing is full of the fluorinated fluid when the fluorinated fluid is in a second temperature range.

7. The battery pack according to claim 1, wherein the cell support comprises at least rock wool.

8. The battery pack according to claim 7, wherein the rock wool are formed with a plurality of cylindrical accommodating spaces to accommodate the plurality of cells.

9. The battery pack according to claim 1, wherein the cell support comprises at least glass wool.

10. The battery pack according to claim 9, wherein the glass wool are formed with a plurality of cylindrical accommodating spaces to accommodate the plurality of cells.

11. The battery pack according to claim 1, wherein the fluorinated fluid comprises at least one of perfluorohexanone and perfluoropolyether.

12. The battery pack according to claim 1, wherein a raised rib (111) is disposed on an outer side of the housing.

13. The battery pack according to claim 1, wherein the housing is capable of forming a sealed space to accommodate the plurality of cells.

14. The battery pack according to claim 1, wherein the fluorinated fluid undergoes, at a critical temperature, conversion between a liquid state and a gaseous state, and the critical temperature is any temperature value or any temperature range between 40 °C and 70 °C.

15. The battery pack according to claim 14, wherein the critical temperature is any temperature value or any temperature range between 40 °C and 50 °C.
